# EUROPEAN PATENT SPECIFICATION

(11) **EP 2 053 164 B1**
(45) Date of publication and mention of the grant of the patent: **01.08.2012**
(21) Application number: 08167526.6
(22) Date of filing: 24.10.2008
(51) Int. Cl.: E01F 8/00, E01F 8/02, B01D 53/88

(54) **Screen installation**
Schirmvorrichtung
Installation d'écran

(30) Priority: 24.10.2007 NL 2000958
(43) Date of publication of application: 29.04.2009
(73) Proprietor: Koninklijke BAM Groep N.V., 3981 AZ Bunnik (NL)
(72) Inventor: Klok, Aart, 3824 DN, Amersfoort (NL); van 't Zelfde, Willem David Anthony, 2807 SG, Gouda (NL)
(74) Representative: van Westenbrugge, Andries

(56) References cited:
- JP-A- 10 151 323
- JP-A- 10 249 167
- JP-A- 10 331 116
- JP-A- 2000 262 864
- JP-A- 2000 273 829
- JP-A- 2001 254 322
- JP-A- 2002 045 649
- JP-A- 2002 215 171

## Description

The invention is related to a screen installation for a stretch of road,comprising two upright walls which extend parallel to each other and between which a flow space is defined, to which flow space a gaseous medium can be supplied, and also a discharge located in proximity to the upper edge of the walls for discharging gaseous medium located between said walls from said flow space, wherein the wall to be turned toward the stretch of road has a permeable structure for supplying gaseous medium to the flow space.

A screen installation is disclosed in JP-A-2000262864. Said screen installation comprises a surface plate, facing the road, which has a large number of holes or slits. The plate is coated with a photocatalyst for converting NOₓ.

The disadvantage of this creen installation is that the NOₓ converting capacity thereof is limited. This is to be attributed to the fact that the contact between the contaminated air and the screen installation occurs in a passive way.

A further screen installation is known from JP-A-10151323. In this known screen installation, air which is contaminated with exhaust gases from the road traffic is drawn into a duct formed after a sound-proofing wall. Both the underside and the upper side of the sound-proofing wall contain inlets via which the contaminated air is drawn in. This drawing-in is generated under the influence of a fan which is powered by solar panels attached above the screen installation.

Titanium dioxide is attached to the side of the sound-proofing wall that is turned toward the stretch of road. The air which is drawn in via the inlets is blown by means of the fan and a current conducting plate vertically downward along said side. NOx, in particular NO2, which is located in the contaminated air, is catalytically converted by the titanium dioxide under the influence of light. Finally, the conversion products have to be removed from the side in question of the sound-proofing wall under the influence of rainwater.

A screen installation of this type has various drawbacks. These are related to the fact that the functioning of the purifying elements thereof is based on causing the contaminated air to circulate by means of an electrically driven fan. Such a drive, and in particular the electric motor, is fairly expensive and sensitive to disturbances. In addition, a fan is merely suitable for operating a limited portion of the screen installation. This means that a large number of electrically driven fans have to be attached over the entire length of the screen installation; this complicates the maintenance of the screen installation. The solar panels necessary for powering the electric motors also entail investment and maintenance costs.

This means that this known screen installation is not suitable for large-scale adaptations. The object of the invention is therefore to provide a screen installation which has a purifying action on the air contaminated by exhaust gases along stretches of road, and which also provides a simple embodiment and reliable functioning. That object is achieved by placing a cap at a certain distance above the upper edge of the walls. Once the air has entered the space between both walls, a chimney effect causes an upward flow. Said upward flow is promoted by wind which sweeps over the upper edge of the wall, and is intensified by the cap.

In the screen installation according to the invention, use is made of the movement which the air on and around a stretch of road has as a result of the influence of the road traffic and/or the natural influence such as the wind. These air movements often have a component directed transversely to the screen installation, which component enables the air to infiltrate the permeable wall. This can produce various effects having a purifying action.

First of all, the permeable wall can provide a filtering action for particles of fine dust entrained by the air. Particles of this type can settle in the permeable wall, in particular in the large number of larger or smaller cracks and openings therein. The air has to change direction a plurality of times as it flows through the permeable wall. Owing to their inherent inertia, relatively large particles of fine dust are less good at following air movements of this type. As a result, they strike the stones in the permeable wall; the permeable wall thus acts as an impactor. Relatively large particles are therefore trapped in the permeable wall.

The permeable structure enables the entire surface of the permeable wall to participate in the action of purifying the air which reaches and flows through the permeable wall transversely thereto. This large surface of the permeable wall thus reduces the flow speed of the air, in such a way that a sufficiently long reaction time is available during which the trapping of particles can take place.

Furthermore, at least the outwardly turned surface of the permeable wall can be lined with titanium dioxide. The internal surface of the permeable wall can also be lined with titanium dioxide. Again, as a result of the permeable structure in combination with the large surface of the permeable wall, the air is brought intensively into contact with titanium dioxide located over the surface of said wall, in such a way that under the influence of sunlight or artificial light conversion of NOx can take place as a result of catalytic action.

Afterwards, the chimney effect can be increased by dividing the internal space into compartments by partitions extending transversely between both walls.

The upward flow thus generated can be utilized by electrostatically purifying the infiltrated air. Such purification entails that fine dust particles are trapped by means of electrical charges. That can for example be achieved by arranging in the flow space means allowing fine dust to be trapped in an electrostatic manner. In a further preferred embodiment, said means consist of electret material. This electret material can be used to remove charged particles or particles having a dipole character from the air. This electret material can extend vertically between both walls in order to provide as large a contact surface as possible.

As an alternative, it is possible to receive in the flow space filter materials which are electrically charged in situ in conjunction with the trapping of the fine dust particles.

According to a further alternative, the fine dust particles can themselves be electrically charged, in such a way that said particles can settle on the ground more quickly.

The wall to be turned away from the stretch of road can be sound-insulating. However, this wall does not have to have a permeable structure, although that is not excluded.

The permeable structure of the wall to be turned toward the stretch of road can be obtained in many different ways. According to a first possibility, the permeable wall can comprise bodies such as stones, in particular lava rocks, and also a gabion or cage wherein the bodies are received. Located between the stacked bodies are cracks and openings of any desired shape, which provide the permeability. Other permeable structures are also conceivable, such as porous plates and the like.

Furthermore, foundation means can be provided for arranging the upright walls next to the stretch of road. In this case, the permeable or porous wall extends continuously up to the foundation. This ensures that the air is forced to flow through the wall, without said air being able to enter the flow space by passing around the wall. After all, in the latter case, no intensive contact of the air with titanium dioxide would be obtained, and no trapping of particles of fine dust would take place either.

The permeability of the permeable wall does not have to be uniform. Thus, for example, the bottom region, where most exhaust gases will after all collect, can be embodied so as to be relatively more permeable than higher regions. A slot can optionally be provided in the lower region.

The screen device according to the invention can, according to a first possibility, be placed in its entirety in those cases wherein a screen installation is not yet present, or else an existing sound-proofing wall has to be replaced in its entirety. In addition, it is however also possible to develop a pre-existing sound-proofing wall to form the screen installation according to the invention. In such a case, the permeable wall and the remaining elements of the screen installation according to the invention are attached to the side of the sound-proofing wall that faces the stretch of road.

The invention further relates to a method for improving the air quality along a stretch of road by means of the screen installation as described hereinbefore, including the steps of:
- placing the screen installation along the stretch of road,
- providing traffic propelled by combustion engines along the screen installation,
- laterally displacing the air through the traffic in such a way that said air obtains a flow component directed toward the screen installation,
- causing the displaced air to infiltrate the intermediate space via the permeable wall,
- causing under the influence of the chimney effect the air which has infiltrated via the permeable wall to rise in the intermediate space and discharging it from the intermediate space.

Because the air over the entire surface of the permeable wall can flow inward into the intermediate space, intensive purification of the air is possible without the need for mechanical auxiliary means such as fans.

The method can furthermore include the step of:
- analyzing the NOx constituents located in the air which infiltrates the permeable wall under the influence of the titanium dioxide lining of the permeable wall and also daylight or artificial light falling thereon.

Furthermore, the invention can include the step of purifying the air in an electrostatic manner. That can be carried out in various ways. According to a first possibility, the method can for this purpose include the step of:
- receiving, by means of attraction to electrostatic means, for example electret material, charged particles and/or particles having a dipole character that are located in the air which has infiltrated the intermediate space.

According to a further possibility, the fine dust particles can themselves be electrically charged, in such a way that said particles settle on the ground.

The invention will be described hereinafter in greater detail with reference to an exemplary embodiment represented in the figures, in which:
Figure 1 is a perspective view of a portion of a stretch of road with a screen installation according to the invention;

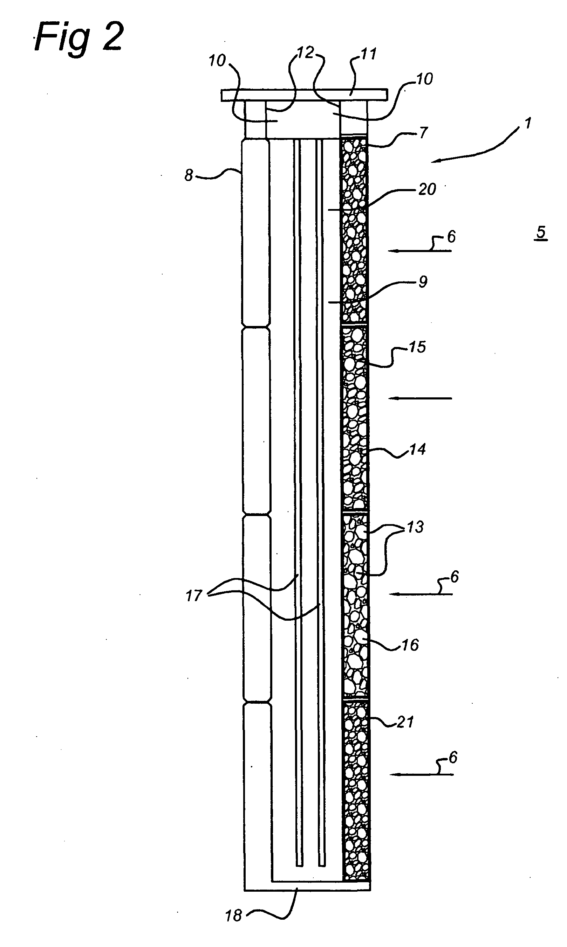

Figure 2 is a cross section through the screen installation.

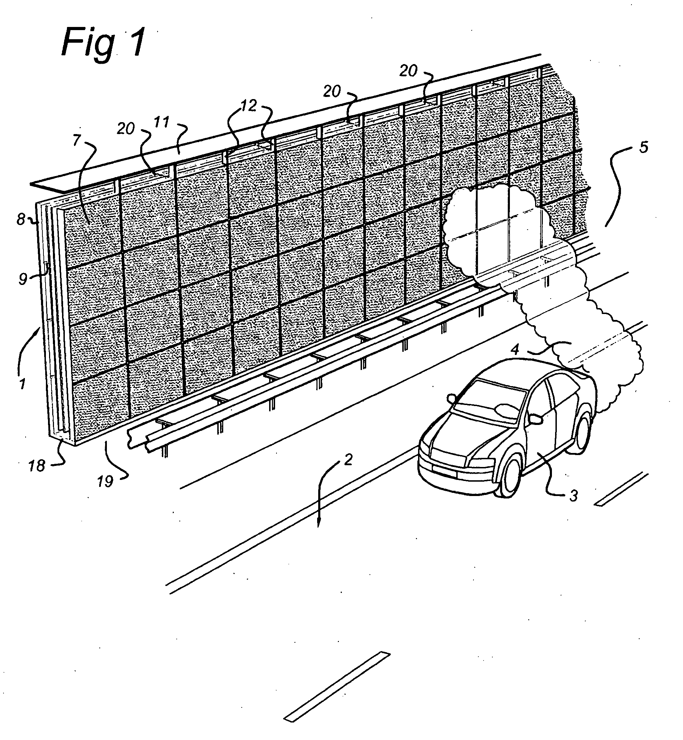

In the situation represented in Figure 1, the screen installation 1 is placed along a stretch of road 2. The traffic 3 advancing there emits exhaust gases 4 which mix with the air 5. The screen installation 1 is constructed from a wall 7 turned toward the stretch of road and also a wall 8 which is located thereafter and turned away from the stretch of road 2. An intermediate space or flow space 9 is located between these walls. At the upper edge of the walls 7, 8, the intermediate space is connected to the open air via the passageways 10 located between the upper edge of the walls 7, 8 and the cover 11. This cover is supported by means of supports 12 at a distance above the walls 7, 8.

The wall 7 turned toward the stretch of road 2 has a permeable structure, as a result of the fact that said wall is constructed from bodies 13, for example lava rocks, which are received in the gabions 14. These gabions 14 consist of metal wire having a mesh such that the bodies 13 are held trapped in the gabions 14. Located between the bodies 13 are jagged cracks 15 via which the air can infiltrate the intermediate space 9 over the entire surface of the permeable wall 7. This is in particular the component 6 of the air 5 that is directed transversely toward the screen installation 1.

The surface of the permeable wall 7 that is directed toward the stretch of road 2 is provided with titanium dioxide 16, in such a way that under the influence of light a catalytic reaction of NOx is obtained. Coarser particles are trapped in the jagged cracks 21 of the permeable wall 7.

In the intermediate space 9 are located sheets, strips or wires 17 made of electrostatic or electret material. The air which has infiltrated the intermediate space 9 can now furthermore be purified when said air flows upward along the electrostatic or electret material 17 under the influence of the chimney effect which occurs between both walls 7, 8. Particles having a dipole character and/or charged particles cling to the electrostatic or electret material. Although two sheets of electrostatic or electret material are represented in the figures, the number can be varied, for example a single sheet or more than two sheets. Also, the electrostatic or electret material does not have to be sheet-like; possible alternatives include strip-like or wire-like electret material. Also, the electrostatic of electret material does not have to hang but rather it can also be fastened to or against the rear wall 8.

The air which eventually issues from the screen installation at the upper edge is thus partly purified of NOx and fine dust.

The screen installation 1 has a foundation 18 by means of which the screen installation is established in the bank 19 along the stretch of road 2. The permeable wall 7 extends right up to this foundation 18. The air is accordingly forced to flow through the permeable wall 7, in order to obtain a maximum purifying effect. However, a slot can optionally be provided in proximity to the underside of the permeable wall 7.

The internal space 9 is divided in the exemplary embodiment shown into compartments by the partitions 20 extending at uniform distances from one another transversely between the walls 7, 8. However, that is not necessary.

## Claims

1. Screen installation (1) for a stretch of road (2), comprising two upright walls (7, 8) which extend parallel to each other and between which a flow space (9) is defined, to which flow space (9) a gaseous medium can be supplied, and also a discharge (10) located in proximity to the upper edge of the walls (7, 8) for discharging gaseous medium located between said walls (7, 8) from said flow space (9), wherein the wall (7) to be turned toward the stretch of road (2) has a permeable structure for supplying gaseous medium to the flow space (9) **characterized in that** a cover (11) is located at a distance above the walls (7, 8).

2. Screen installation according to Claim 1, wherein at least the outwardly turned surface of the permeable wall (7) is provided with a catalyst such as titanium dioxide (16).

3. Screen installation according to Claim 1 or 2, wherein the wall (8) to be turned away from the stretch of road (2) is sound-insulating.

4. Screen installation according to one of the preceding claims, wherein purification means are located in the flow space (9) for purifying the medium in an electrostatic manner.

5. Screen installation according to Claim 4, wherein the purification means contain an electrostatic material, such as electret material (17).

6. Screen installation according to Claim 5, wherein the electrostatic material (17) is sheet-like, strip-like or wire-like.

7. Screen installation according to one of the preceding claims, wherein the permeable wall (7) comprises bodies such as lava rocks (15) and also a gabion (14) or cage wherein bodies such as lava rocks (15) are received.

8. Screen installation according to one of the preceding claims, wherein foundation means (18) are provided for arranging the upright walls (7, 8) next to the stretch of road (2).

9. Screen installation according to Claim 8, wherein at least the permeable wall (7) extends right up to the foundation (18).

10. Screen installation according to one of the preceding claims, wherein the permeability of the permeable wall (7) is greater in a relatively low region than in a relatively high region.

11. Screen installation according to one of the preceding claims, wherein a slot is located in a relatively low region of the permeable wall.

12. Screen installation according to one of the preceding claims, wherein the permeable wall (7) is porous.

13. Screen installation according to one of the preceding claims, wherein the internal space (9) is divided into compartments by partitions (20) extending transversely between both walls (7, 8).

## Patentansprüche

1. Abschirmungs-Installation (1) für einen Straßenabschnitt (2), die zwei aufrecht stehende Wände (7,8) umfasst, die sich parallel zueinander erstrecken und zwischen denen ein Strömungsraum (9) ausgebildet ist, wobei dem Strömungsraum (9) ein gasförmiges Medium zugeführt werden kann, und die des Weiteren einen Auslass (10) umfasst, der sich nahe an der Oberkante der Wände (7, 8) befindet, um zwischen den Wänden (7, 8) befindliches gasförmiges Medium aus dem Strömungsraum (9) auszulassen, wobei die Wand (7), die dem Straßenabschnitt (2) zugewandt sein soll, eine durchlässige Struktur zum Zuführen von gasförmigem Medium zu dem Strömungsraum (9) hat, **dadurch gekennzeichnet, dass** sich eine Abdeckung (11) in einem Abstand oberhalb der Wände (7, 8) befindet.

2. Abschirmungs-Installation nach Anspruch 1, wobei wenigstens die nach außen gewandte Fläche der durchlässigen Wand (7) mit einem Katalysator, wie beispielsweise Titandioxit (16), versehen ist.

3. Abschirmungs-Installation nach Anspruch 1 oder 2, wobei die Wand (8), die von dem Stra-βenabschnitt (2) weggewandt sein soll, schallisolierend ist.

4. Abschirmungs-Installation nach einem der vorangehenden Ansprüche, wobei sich Reinigungseinrichtungen in dem Strömungsraum (9) befinden, mit denen das Medium elektrostatisch gereinigt wird.

5. Abschirmungs-Installation nach Anspruch 4, wobei die Reinigungseinrichtungen ein elektrostatisches Material, wie beispielsweise Elektret-Material (17) enthalten.

6. Abschirmungs-Installation nach Anspruch 5, wobei das elektrostatische Material (17) tafelförmig, bandförmig oder drahtförmig ist.

7. Abschirmungs-Installation nach einem der vorangehenden Ansprüche, wobei die durchlässige Wand (7) Körper, wie beispielsweise Lavasteine (15), und des Weiteren einen Drahtgeflechtbehälter (14) oder Käfig umfasst, in dem Körper, wie beispielsweise Lavasteine (15), aufgenommen sind.

8. Abschirmungs-Installation nach einem der vorangehenden Ansprüche, wobei Fundamenteinrichtungen (18) zum Anordnen der aufrecht stehenden Wände (7, 8) neben dem Straßenabschnitt (2) vorhanden sind.

9. Abschirmungs-Installation nach Anspruch 8, wobei sich wenigstens die durchlässige Wand (7) unmittelbar bis zu dem Fundament (18) erstreckt.

10. Abschirmungs-Installation nach einem der vorangehenden Ansprüche, wobei die Durchlässigkeit der durchlässigen Wand (7) in einem relativ niedrigen Bereich größer ist als in einem relativ hohen Bereich.

11. Abschirmungs-Installation nach einem der vorangehenden Ansprüche, wobei sich ein Schlitz in einem relativ niedrigen Bereich der durchlässigen Wand befindet.

12. Abschirmungs-Installation nach einem der vorangehenden Ansprüche, wobei die durchlässige Wand (7) porös ist.

13. Abschirmungs-Installation nach einem der vorangehenden Ansprüche, wobei der Innenraum (9) durch Trennwände (20), die sich quer zwischen beiden Wänden (7, 8) erstrecken, in Kammern unterteilt ist.

## Revendications

1. Ecran (1) pour portion de route (2), comprenant deux murs droits (7, 8) parallèles l'un par rapport à l'autre et entre lesquels un espace d'écoulement (9) dans lequel un milieu gazeux peut être fourni est défini, et aussi une évacuation (10) localisée à proximité du coin supérieur des murs (7, 8) pour déverser le milieu gazeux localisé entre lesdits murs (7, 8) depuis l'espace découlement (9), dans lequel le mur (7) étant tourné vers la portion de route (2) a une structure perméable pour apporter le milieu gazeux vers l'espace d'écoulement (9) **caractérisé en ce qu'**un couvercle (11) est situé à une distance au-dessus des murs (7, 8).

2. Ecran selon la revendication 1, dans lequel au moins la surface du mur perméable (7) tournée vers l'extérieur est équipée d'un catalyseur tel que le dioxyde de titanium (16).

3. Ecran selon la revendication 1 ou 2, dans lequel le mur (8) positionné à l'extérieur de la portion de route (2) est insonorisé.

4. Ecran selon l'une quelconque des revendications précédentes, dans lequel les moyens de purification sont localisés dans l'espace d'écoulement (9) pour purifier le milieu de manière électrostatique.

5. Ecran selon la revendication 4, dans lequel les moyens de purification contiennent un matériau électrostatique, tel qu'un matériau électret (17).

6. Ecran selon la revendication 5, dans lequel le matériau électrostatique (17) est sous forme de feuille, de bande ou de fil.

7. Ecran selon l'une quelconque des revendications précédentes, dans lequel le mur perméable (7) comprend des corps tels que des pierres de lave (15) et du gabion (14) ou une cage pour recevoir les corps tels que des pierres de lave (15).

8. Ecran selon l'une quelconque des revendications précédentes, dans lequel les fondations (18) sont prévues pour disposer les murs droits (7, 8) près de la portion de route.

9. Ecran selon la revendication 8, dans lequel au moins le mur perméable (7) s'étend à droite de la fondation (18).

10. Ecran selon l'une quelconque des revendications précédentes, dans lequel la perméabilité du mur perméable (7) est supérieure dans la zone relativement basse que dans la zone relativement élevée.

11. Ecran selon l'une quelconque des revendications précédentes, dans lequel une ouverture est située dans une région relativement basse du mur perméable.

12. Ecran selon l'une quelconque des revendications précédentes, dans lequel le mur perméable (7) est poreux.

13. Ecran selon l'une quelconque des revendications précédentes, dans lequel l'espace interne (9) est divisé en compartiments par des cloisons (20) s'étendant transversalement entre les deux murs (7, 8).
